# EUROPEAN PATENT SPECIFICATION

(11) **EP 4 253 172 B1**
(45) Date of publication and mention of the grant of the patent: **19.02.2025**
(21) Application number: 23166124.0
(22) Date of filing: 31.03.2023
(51) Int. Cl.: B60T 3/00, B65G 69/00

(54) **WHEEL CHOCK WITH A LONGITUDINAL EXTENSION**
RADBREMSKEIL MIT LÄNGSVERLÄNGERUNG
CALE DE ROUE À EXTENSION LONGITUDINALE

(30) Priority: 31.03.2022 US 202263325873 P
(43) Date of publication of application: 04.10.2023
(73) Proprietor: 9172-9863 Québec Inc., Terrebonne, Québec J6X 4J8 (CA)
(72) Inventor: LÉANDRE, Raphaël, QUÉBEC, H4L 1Y7 (CA); JETTÉ, Gaétan, QUÉBEC, J7L 4E7 (CA); GROTHÉ, Daniel, QUÉBEC, J7M 1G4 (CA); PALMER, Gregory, QUÉBEC, J7K 3V6 (CA)
(74) Representative: Cabinet Camus Lebkiri

(56) References cited:
- FR-A- 1 494 889
- FR-A2- 2 565 539
- US-B2- 10 864 895

## Description

### TECHNICAL FIELD

The technical field relates generally to wheel chocks and restraint systems for preventing vehicles from moving in an unauthorized or accidental manner, for instance at a loading dock, a parking lot, or any other locations.

### BACKGROUND

Wheels chocks are devices that can be positioned immediately next to a wheel of a parked land vehicle so as to act as an obstacle in the event of an unauthorized or accidental departure attempt. This event can happen as a result, for instance, of an error or a miscommunication, or because someone is trying to steal the vehicle. Many other situations exist, including ones where the vehicle movements are caused by other factors, such as trailer creep where the motion of a lift truck entering and exiting the semi-trailer can cause separation between the vehicle and the dock leveler, or gravity acting on the vehicle when parked on a sloping surface, to name just a few. Wheel chocks can also be used to create an obstacle in an arrival direction to prevent an arrival attempt, and some wheel chocks can be designed to work in two opposite directions. Other situations are possible as well.

Various wheel chocks and restraint systems have been suggested over the years. Examples can be found, for instance, in U.S. Pat. Nos. 10,793,119 and 10,864,895. The underside of wheel chocks often includes a plurality of teeth or other kinds of blocking elements engaging corresponding blocking elements or other features provided on ground-anchored base plates over which these wheel chocks can be set.

While many of the existing wheel chocks and restraint systems have been very useful and relatively effective, there is always room for further improvements in this area of technology.

### SUMMARY

In some aspects, the present invention provides a wheel chock having a longitudinal extension, a wheel chock restraint system, and a method of securing a wheel chock on a base plate as described herein.

According to a broad aspect of the present invention, a wheel chock is provided, comprising a substantially rigid main body configured to engage a wheel tire of a vehicle to prevent movement of a vehicle wheel, the main body having a sloped top wheel-facing side configured to receive in overlay and abutment the wheel tire, the main body having a base comprising an underside with a first plurality of downwardly projecting teeth elements configured to releasably engage a corresponding ground-anchored retention plate having protrusions, such as ribs, ridges or the like, for engagement with the teeth elements and, in use, to resist movement of the wheel chock and vehicle wheel once the teeth are engaged on the retention plate and as the wheel tire applies pressure to the top wheel-facing side of the main body, the main body being further provided with at least one extension member extending from the base and longitudinally from the main body, the at least one extension member being configured, in use, to lie adjacent to at least a portion of a side wall of the wheel tire, the at least one extension member further comprising a second plurality of teeth elements also configured to releasably engage the corresponding ground-anchored retention plate having protrusions for engagement with the teeth elements and to further resist movement of the wheel chock and vehicle wheel.

According to another broad aspect of the present invention, a wheel chock restraint system is provided, comprising a wheel chock as described herein, and a corresponding ground-anchored base plate configured to be disposed under a wheel tire and under the wheel chock, and configured to mechanically engage the teeth elements of the wheel chock.

In some embodiments, the wheel chock further comprises a wheel tire-engaging resilient spacer. In some embodiments, the wheel chock further comprises a wheel tire-engaging bulge, the bulge protruding from an upper portion of the main body and configured to engage a portion of the wheel tire. In some embodiments, the main body is monolithic.

In some embodiments the at least one extension member extends along at least a portion of a side of the main body. In some embodiments, the at least one extension member is formed integrally with the main body. In some embodiments, the at least one extension member is coupled to the main body. In some embodiments, each of the at least one extension member is pivotably coupled to said main body.

In some embodiments, the ground-anchored base plate comprises heating means sufficient to melt snow or ice. In some embodiments, the ground-anchored base plate is configured to be removably anchored to the ground.

In some embodiments, the wheel chock restraint system comprises a plurality of ground-anchored base plates.

In some embodiments, the wheel chock restraint system further comprises spring-assisted means configured to move the wheel chock into and out of engagement position on the ground-anchored base plate. In some embodiments, the spring-assisted means is a retractable arm. In some embodiments, the retractable arm is motorized.

Details on the different aspects of the proposed concept and on various possible combinations of technical characteristics or features will become apparent in light of the following detailed description and the appended figures.

### BRIEF DESCRIPTION OF THE FIGURES

FIG. 1 is a semi-schematic side view illustrating an example of a wheel chock located in front of a wheel of a generic land vehicle.
FIG. 2 is an enlarged side view of some of the parts in FIG. 1.
FIG. 3 is a front isometric view illustrating only a wheel chock and a base plate similar to the ones shown in FIG. 1.
FIG. 4 is a rear isometric view illustrating an example of a wheel chock having a longitudinal extension in accordance with the proposed concept.
FIG. 5 is a front isometric view of the wheel chock in FIG. 4.
FIG. 6 is a side view of the wheel chock in FIG. 4.
FIG. 7 is an enlarged fragmentary view of some of the teeth on the wheel chock shown in FIG. 6.
FIG. 8 is a front view of the wheel chock in FIG. 4.
FIG. 9 is a front isometric view of another example of a wheel chock having a longitudinal extension in accordance with the proposed concept.
FIG. 10A is a side view of the wheel chock in FIG. 9.
FIGS. 10B and 10C are views similar to FIG. 10A showing the protruding portion of the extension at examples of limit positions.
FIG. 11 is a rear isometric view of another example of a wheel chock having a longitudinal extension in accordance with the proposed concept.
FIG. 12 is a front isometric view of the wheel chock in FIG. 11.
FIG. 13 is a side view of the wheel chock in FIG. 11.
FIG. 14 is a front isometric view of another example of a wheel chock having a longitudinal extension in accordance with the proposed concept.
FIG. 15 is a first rear isometric view illustrating another example of a wheel chock having a longitudinal extension in accordance with the proposed concept.
FIG. 16 is a first front isometric view of the wheel chock in FIG. 15.
FIG. 17 is a second front isometric view of the wheel chock in FIG. 15.
FIG. 18 is a second rear isometric view of the wheel chock in FIG. 15.
FIG. 19 is a first side view of the wheel chock in FIG. 15.
FIG. 20 is a second side view of the wheel chock in FIG. 15.
FIG. 21 is a semi-schematic view of the wheel chock in FIG. 15 with an example of a vehicle having a swap body configuration.
FIGS. 22 to 27 are schematic top views illustrating examples of configurations.
FIG. 28 is a side view of an exemplary wheel chock in use according to the present disclosure.

### DETAILED DESCRIPTION

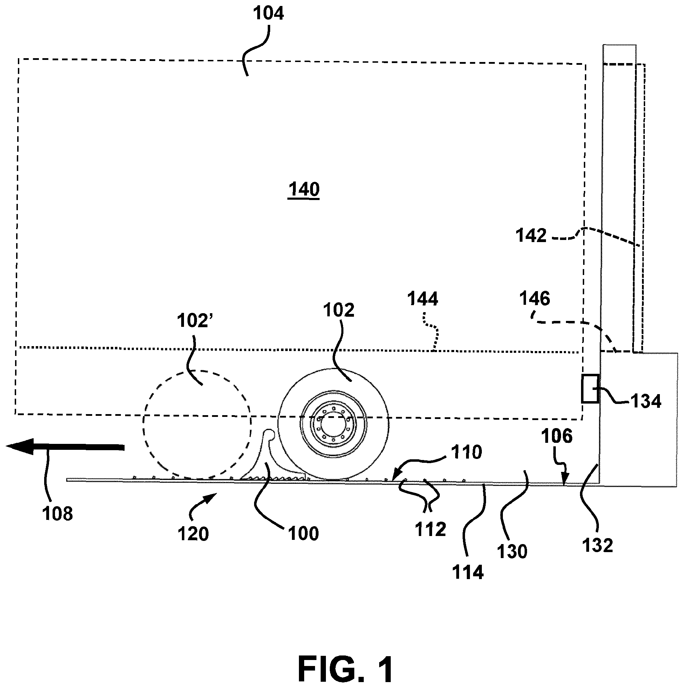

FIG. 1 is a semi-schematic side view illustrating an example of a wheel chock 100 located in front of a wheel 102 of a generic land vehicle 104. The wheel chock 100 is positioned for preventing the vehicle 104 from moving away in the event of an unauthorized or accidental departure attempt. The wheel chock 100 creates an obstacle to be removed only at the appropriate moment, for instance by the driver of the vehicle 104 or using an automatic positioning arrangement or another kind mechanism, when the vehicle 104 is authorized to leave. It is otherwise left in position.

Wheel chocks can also be used to create an obstacle in an arrival direction to prevent an arrival attempt. It should be noted that terms such as "departure attempt" and "moving away" are often used in the interest of brevity, and these terms are not excluding the possibility of using of wheel chocks for preventing vehicles from moving into position in the event of an unauthorized or accidental arrival attempt. Nevertheless, for the sake of uniformity, the generic term "maneuver attempt" will be now used.

The vehicle 104 depicted in FIG. 1 is a semi-trailer and only the rear portion is schematically illustrated. A semi-trailer is designed to be hauled by a truck tractor, but this is only one among a multitude of possibilities. Among other things, the wheel chock 100 can be used with other kinds of vehicles, including vehicles that are not semi-trailers and even vehicles completely unrelated to the transport industry. Other variants are possible as well.

In FIG. 1, the vehicle 104 has a tandem axle arrangement located at the rear of the vehicle 104, and the wheel chock 100 is positioned within an intervening space between the wheel 102 of the rearmost axle and an adjacent wheel 102' on the other axle that is immediately in front of the wheel 102. These wheels 102, 102' are non-driving wheels in the example. Other configurations and arrangements are possible. Among other things, the wheel chock 100 can be positioned elsewhere and does not necessarily need to be placed next to a wheel at the rear of a vehicle. The wheel chock 100 can also cooperate with a wheel that is not part of a tandem axle arrangement. Truck tractors with large engines can generate a very considerable torque, and while wheel chocks often work more efficiently with non-driving wheels since driving wheels are more likely to generate an uplifting force when the traction conditions are optimal and then roll over or otherwise overrun a wheel chock in the event of an unauthorized or accidental maneuver attempt, the wheel chock 100 can still be used to block a driving wheel if this is found to be appropriate for the intended purpose or for other reasons. Other variants are possible as well.

Many vehicles, like the semi-trailer of the example shown in FIG. 1, can have a dual wheel arrangement where two wheels are positioned side-by-side at each end of each axle. In this case, the word "wheel" used in the context of the wheel chock 100 refers to the exterior wheel and/or the interior wheel at the end of the corresponding axle, depending on where the wheel chock 100 is positioned. Most implementations will have the wheel chock 100 facing only the exterior wheel because it is generally easier to access from the side of the vehicle 104. However, the wheel chock 100 can also be placed simultaneously in front of the two side-by-side wheels in some situations, or even only in front of the interior wheel in others. The word "wheel", even in a singular form, means either only one of the side-by-side wheels or both side-by-side wheels simultaneously in the context of a dual wheel arrangement. Other configurations and arrangements are possible. Among other things, the wheel chock 100 can be used with a wheel that is not part of a dual wheel arrangement. Some wheel arrangements may include more than two juxtaposed wheels at each end of a same axle, and the preceding remark also applies to this situation. Other variants are possible as well.

The wheel chock 100 in the example shown in FIG. 1 is designed to cooperate with a ground-anchored base plate 110. The base plate 110 is generally a relatively flat structure anchored to the ground 106 that does not create a significant obstruction to movements or to other operations occurring at the location where it is installed. The wheel chock 100 and the base plate 110 are part of a wheel chock restraint system 120. This wheel chock restraint system 120 is designed so that a latching engagement can be established between the wheel chock 100 and the base plate 110 simply by putting the wheel chock 100 at the right place on the base plate 110 without having to use removable mechanical fasteners, for instance as bolts or the like. The latching engagement allows the wheel chock 100 to be in a wheel-blocking position so as to prevent the vehicle 104 from moving in at least one direction. The wheel chock 100 prevents the vehicle 104 from moving in the direction that corresponds to the longitudinal axis 108 in the illustrated example. The base plate 110, among other things, prevents the wheel chock 100 from being pushed away over a significant distance in the event of an unauthorized or accidental maneuver attempt. Other configurations and arrangements are possible. Among other things, the base plate 110 can be replaced by another feature or even be omitted from the restraint system 120 in some implementations. While the wheel chock 100 and the base plate 110 can be designed to function without using removable mechanical fasteners to hold the wheel chock 100 in position, removable mechanical fasteners could nevertheless be employed in some specialized implementations. Other variants are possible as well.

The illustrated wheel chock 100 has an overall wheel chock height, an overall wheel chock length, and an overall wheel chock width. The wheel chock height is the vertical dimension that is generally perpendicular to the top surface of the base plate 110. The wheel chock length is the horizontal dimension that is generally parallel to the longitudinal axis 108, and the wheel chock width is the horizontal transversal dimension that is perpendicular to the longitudinal axis 108. The direction of motion may not always be the forward travel direction of the vehicle 104 in all situations, and the wheel chock 100 can also be positioned and/or configured to prevent it from moving in its rearward travel direction. The terms "front" and "rear" are also contextual. For instance, the front side of the wheel chock 100 can be facing the front side of the wheel 102 of the vehicle 104.

The vehicle 104 in the example of FIG. 1 is shown as being parked at a loading dock 130 and its rear side is adjacent to a wall 132 located at a bottom end of the loading dock 130. The rear bumper of the vehicle 104 can rest against one or more cushions 134 provided on the wall 132, as shown schematically in FIG. 1. The wall 132 can be part of a commercial building, for instance a warehouse, a distribution center, or the like. Other configurations and arrangements are possible. Among other things, while the term "loading dock" generally refers to areas where freight or other kinds of payload can be loaded or unloaded in vehicles, this term is used herein essentially for the sake of simplicity. Loading docks are not the only locations where wheel chocks can be used. For instance, wheel chocks can be used in parking lots or areas, at truck stops, etc. The term "ground" refers generally to the top surface of the loading dock 130 or of any other location where the restraint system 120 is provided, whether this location is indoors or outdoors. The ground 106 can have a relatively flat and horizontal top surface, as shown, but this top surface can also be slopped and/or irregular on at least a portion thereof. It is not necessarily a paved surface and in the case of an indoor location, it can refer to the floor. The wheel 102 of the vehicle 104 can rest over the top surface of the base plate 110 and/or over the top surface of the ground 106 when the vehicle 104 is parked or when the wheel 102 pushes on the wheel chock 100. For the sake of simplicity, the generic term "ground surface" will be used to cover all possibilities. Other variants are possible as well.

The vehicle 104 illustrated in FIG. 1 includes a cargo compartment 140. Access into the cargo compartment 140 can be made, for instance, using a rear door provided on the vehicle 104. This rear door will generally be in registry with a corresponding dock door 142 when the vehicle 104 is parked at the end of the loading dock 130. The dock door 142 allows an opening provided through the wall 132 to be selectively closed and opened. The floor 144 inside the cargo compartment 140 and the floor 146 in front of the dock door 142 are shown being at the same height or at a similar height. A ramp or dock leveler (not shown) can otherwise be used between both floors 144, 146 if the height difference is too important for allowing a person or equipment, such as a lift truck or the like, to load and/or unload the cargo inside the cargo compartment 140 of the vehicle 104. Other configurations and arrangements are possible. Among other things, the vehicle 104 may not include a rear door and/or it can be designed differently in some implementations. The loading dock 130 can also be designed differently. Other variants are possible as well.

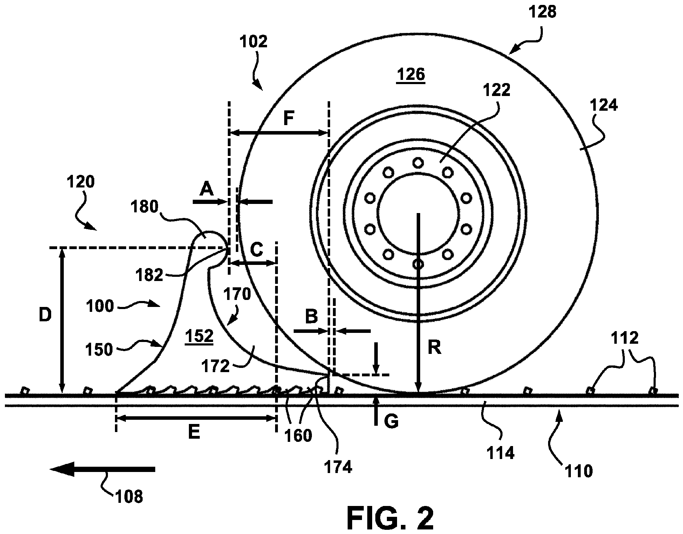

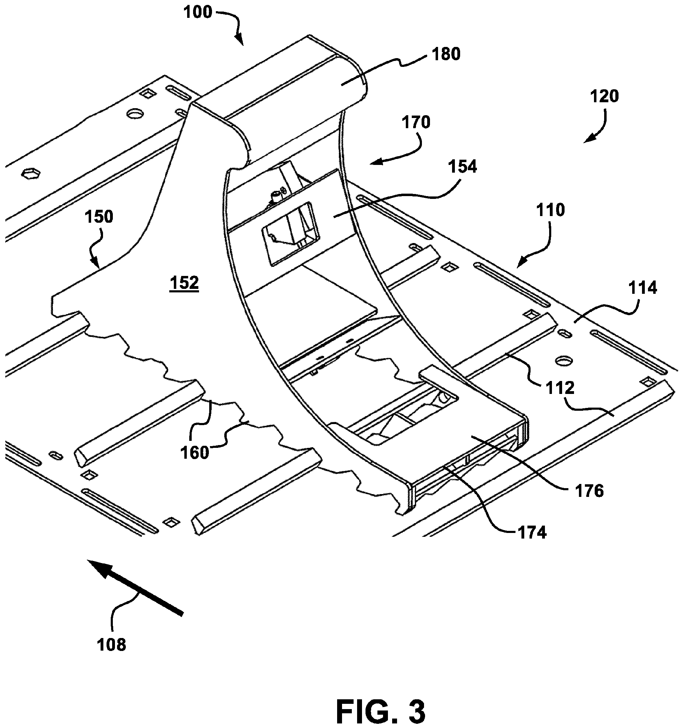

The illustrated base plate 110 includes a plurality of blocking elements 112 which may be ridges, ribs, protrusions or the like and may be transversally disposed thereon. These blocking elements 112 can also be seen in FIGS. 2 and 3. FIG. 2 is an enlarged side view of some of the parts in FIG. 1, and FIG. 3 is a front isometric view illustrating only a wheel chock 100 and a base plate 110 similar to the ones shown in FIG. 1.

The blocking elements 112, also sometimes referred to as teeth or stoppers, can be in the form of transversally disposed rectilinear bars or rods projecting above the top side of corresponding main plate members 114, and each blocking element 112 can extend uninterruptedly across the width of the base plate 110, as shown. Each illustrated blocking element 112 has two opposite slanted flat surfaces, one at the front and one at the rear. The blocking elements 112 are spaced apart from one another along the longitudinal axis 108, for instance regularly spaced individually or in pairs. Other configurations and arrangements are possible. Among other things, each blocking element 112 or at least some of them can be designed differently, for instance, be in the form of two or more spaced apart segments instead of extending uninterruptedly across the width of the base plate 110. The lateral surfaces of the blocking elements 112 can also be designed completely differently in some implementations. The blocking elements 112 can be in the form of holes, for instance holes made through the main plate members 114. Other variants are possible as well.

The blocking elements 112 and the main plate members 114 can be made of a metallic material, such as aluminum, steel, or alloys thereof. For instance, the main plate members 114 can be sturdy flat metal sheets having a rectangular shape, and the blocking elements 112 can be rigidly attached to the main plate members 114 by welding. Among other things, the main plate members 114 can include a plurality of transversally extending slots so that the bottom side of each blocking element 112 can be inserted in a corresponding one of these slots and then welded from the underside of the main plate members 114 when the base plate 110 is manufactured. This method can leave the junctions between the blocking elements 112 and the top surface of the main plate members 114 substantially free of welding cords. Other configurations and arrangements are possible. Among other things, nonmetallic materials can be used in some implementations. The blocking elements 112 can be rigidly attached to the main plate members 114 without using slots, for instance be welded from the top side. Other manufacturing methods and processes are also possible, including ones not involving welding. The main plate members 114 can have non-rectangular shapes and/or not be in the form of flat sheets in some implementations. Other variants are possible as well.

The base plate 110 has an elongated and substantially rectangular overall shape in the illustrated example. It extends linearly along the longitudinal axis 108. The base plate 110 can be made much longer than required and this can allow the wheel chock 100 to be placed at many different longitudinal positions to accommodate vehicles of different sizes and wheel layouts. Having these numerous possible positions for the wheel chock 100 can be very useful to maximize the versatility of the wheel chock restraint system 120. The base plate 110 can be manufactured in small sections to be assembled on site, each section corresponding, for instance, to a main plate member 114 with a number of blocking elements 112 or other features. Such modular design can be convenient for customizing the length of the base plate 110 by simply using the corresponding number of sections for each site. Each section can include a plurality of spaced-apart holes around the periphery of the main plate members 114 for receiving the fasteners, for instance using bolts or any other kinds of mechanical fasteners to anchor them to the ground 106. The modular design can also decrease manufacturing costs, as well as costs related to storage, transportation, handling, and installation of the base plate 110. Other configurations and arrangements are possible. Among other things, in some implementations, the base plate 110 can be designed to only provide a very limited number of possible positions, or even only a single position. Some or even all the sections of the base plate 110 can be spaced apart from one another instead of being juxtaposed end to end, and these sections or groups of sections do not necessarily need to be in registry with one another with reference to the longitudinal axis 108 to be considered as being part of a same base plate. Manufacturing the base plate 110 as a single monolithic element still remains a possible option. The base plate 110 can be anchored to the ground 106 without using mechanical fasteners such as bolts or the like. Other variants are possible as well.

As shown in FIG. 2, the wheel 102 can include a rigid rim 122 at the center, for instance one made of a metallic material, and a tire 124 that is mounted around the rim 122. The rim 122 can be bolted or be otherwise removably attached to a rotating element at the end of a corresponding axle of the vehicle 104. The tire 124 can be made of a resilient material, for instance a material including rubber or the like, and can be a gas-inflated pneumatic tire filled with a gas under pressure, for instance pressurized air. Other configurations and arrangements are possible. Among other things, some tires can be designed without having a gas-inflated interior, and the wheel 102 may not necessarily include a tire or a resilient material in some implementations. For instance, the wheel 102 could be made entirely of a rigid material. Other variants are possible as well.

The illustrated tire 124 includes two opposite sidewalls 126, one being on the exterior side (FIG. 2) and the other on the interior side. It also includes a circumferentially disposed tire tread 128. The tire tread 128 is essentially the part of the tire 124 engaging the ground surface. Even when the cargo compartment 140 is empty, the contact area between the tire tread 128 and the ground surface is relatively flat, and the tire tread 128 is thus not entirely circular. The size of the contact area, however, can significantly increase during the loading process when the vehicle 104 is a semi-trailer or another kind of vehicle that can transport a heavy payload. Pneumatic tires for semi-trailers are often pressurized at a relatively high pressure, for instance, about 100 psi (689 kPa), but the size of the contact area may still noticeably increase because semi-trailers are often designed to carry heavy payloads that can be several times the weight of the empty vehicle. For the sake of simplicity, the tire tread 128 can be considered to be in an undeformed state when the cargo compartment 140 is empty, and FIG. 2 illustrates the tire tread 128 being essentially circular for this reason.

An increase in size of the contact area during the loading process can occur during the loading process, for instance when a payload is loaded into an empty cargo compartment 140. The front end of the wheel chock 100 is generally placed relatively close to the tire tread 128, and this could cause this front end to become stuck underneath the wheel 102 if the contact area increased to a point where it now overlaps this part of the wheel chock 100. This overlapping can prevent the wheel chock 100 from being removed using an automatic positioning arrangement or even by hand. In some situations, if the vehicle 104 cannot be backed up just enough to free the wheel chock 100, for instance because the vehicle 104 is already at the very end of the loading dock 130, it may be necessary to remove at least some of the payload from the cargo compartment 140. This situation is highly undesirable since it will create delays and additional work, among other things. A resilient spacer (not shown) can be useful to help users keep an optimum distance between the wheel 102 and the wheel chock 100 when it is set in position over the base plate 110. The resilient spacer can be made, for instance, of rubber or of another flexible material, and can project at an oblique angle at the front of the wheel chock 100. Other configurations and arrangements are possible. Among other things, the spacer can be designed differently in some implementations and it may also be omitted in others. Other variants are possible as well.

The wheel chock 100 includes a main body 150. The main body 150 is the supporting rigid structure of the wheel chock 100. It includes a reinforced framework having the structural strength to resist the forces applied on the wheel chock 100 in the event of an unauthorized or accidental maneuver attempt. It is an assembly of various strong rigid parts, for instance parts made of a metallic material such as aluminum, steel, or alloys thereof, that can be welded or otherwise rigidly attached to form the main body 150. It is often constructed as an open structure to save weight. The main body 150 of the illustrated wheel chock 100 has a monolithic construction, thus no moving or easily detachable part once it is fully assembled, for improving strength and for minimizing the manufacturing costs. Additional components can be added to the main body 150, if desired and/or required, but in general, a monolithic main body does not require any movable parts to cooperate with the base plate 110. Other configurations and arrangements are possible. Among other things, the main body 150 can still have a construction that is not monolithic or entirely monolithic in some implementations. Other materials or combination of materials can be used in the construction of the main body 150. Other variants are possible as well.

In the illustrated example, the main body 150 includes two spaced-apart main side members 152. The side members 152 are in the form of substantially vertically extending plates that are rigidly connected together using an intervening substructure, which substructure can include a plurality of transversal plate members 154, as shown. The side members 152 form the exterior and interior walls of the main body 150 of the wheel chock 100. Other configurations and arrangements are possible. Among other things, the main body 150 does not necessarily need to be sized and shaped as shown and/or described in all implementations. The various components can also be designed, positioned and/or attached differently. Other variants are possible as well.

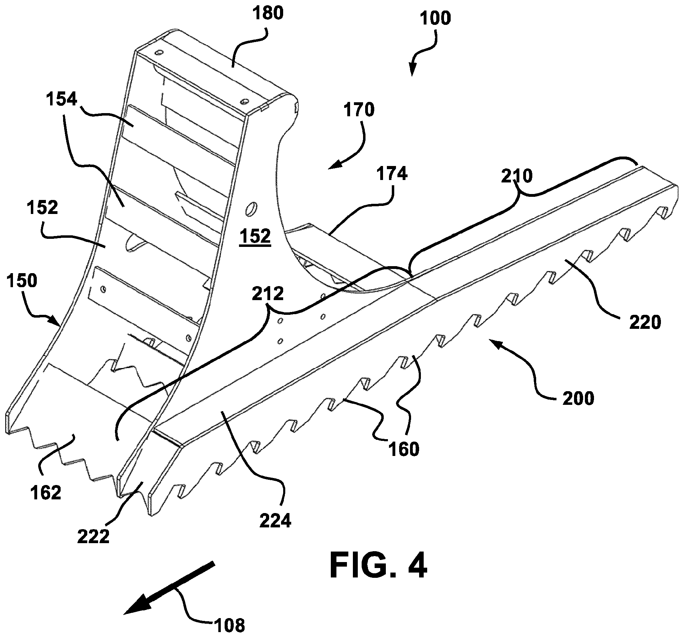

As best shown in FIGS. 2 and 3, blocking elements, referred to hereafter as "teeth 160", are provided on the underside of the main body 150 of the wheel chock 100. They are designed to cooperate with the blocking elements 112 on the base plate 110 when the wheel chock 100 is set and oriented parallel to the longitudinal axis 108. Each tooth 160 can be formed by the surfaces and/or edges of two or more transversally spaced-apart corresponding subparts forming a row in the transversal direction, these subparts being for instance added features and/or remnants between successive cutouts machined along the bottom of each side member 152. Some of the teeth 160 can also include and/or be formed by other elements, for instance transversally extending reinforcing flanges or blades 162 (FIG. 4) spanning between two corresponding subparts within the same row. Other configurations and arrangements are possible. Among other things, the wheel chock 100 can be designed differently and at least some of the teeth 160 can be formed using added subparts or elements instead of cutouts. The wheel chock 100 can include blocking elements that are not teeth in some implementations, and at least some of the blocking elements could even be omitted entirely in others. Other variants are possible as well.

In the illustrated example, the blocking elements 112 of the base plate 110 include opposite inclined lateral surfaces, and the subparts and/or the other elements of each tooth 160 under the wheel chock 100 include a slanted surface or edge configured and disposed to engage or fit under a corresponding one of these inclined lateral surfaces, in particular ones that are generally facing downwards when the wheel chock 100 is in a wheel-blocking position. At least some of the teeth 160 can include sharp edges at their free end in some implementations. These sharp edges can be useful for instance in cold weather conditions when the base plate 110 has some ice or snow thereon. The edges can pierce through a layer of ice or packed snow to reach the blocking elements 112. Other configurations and arrangements are possible. Among other things, the blocking elements 112 of the base plate 110 can be designed without having one or more inclined lateral surface. For instance, the teeth 160 could be configured and disposed to extend under a bottom edge of the blocking elements 112 so as to resist upward vertical forces. The sharp edges can be omitted in some implementations. Other variants are possible as well.

The longitudinal distance between two successive teeth 160 under the wheel chock 100 can be subdivided into a fraction of the longitudinal distance between two successive blocking elements 112 on the base plate 110. This allows the position of the wheel chock 100 on the base plate 110 to be adjusted by increments that are smaller than the longitudinal distance between two successive blocking elements 112, thereby providing a greater flexibility in the adjustment of the position of the wheel chock 100 with reference to the wheel 102. For instance, the spacing between each tooth 160 under the illustrated wheel chock 100 corresponds approximately to one third of the spacing between two successive blocking elements 112. Still, the longitudinal distance between two successive teeth 160 can be made slightly smaller, for instance about 1 or 2 mm smaller. The wheel chock 100, however, is designed so that this narrower tooth spacing does not create any mismatch between the blocking elements 112 and the underside of the main body 150. The offset spacing is a feature that can be useful to prioritize the frontmost engagement between a tooth 160 and a corresponding blocking element 112, leaving the other adjacent sets slightly away from one another. Among other things, it mitigates the likelihood of inadvertently creating a pivot point at the backmost engagement between a tooth 160 and a blocking element 112, which pivot point can increase the risks of tipping when the wheel chock 100 is subjected to a significant force during an unauthorized or accidental maneuver attempt. Other configurations and arrangements are possible. Among other things, while having a spacing between successive teeth 160 that is a fraction of the spacing between two successive blocking elements 112 and/or having a slightly narrower overall spacing for the teeth 160 can generally be desirable, it is possible to omit one or even both of these features in some implementations. Other variants are also possible as well.

The wheel chock 100 includes a wheel-facing side 170, and this wheel-facing side 170 can be greatly recessed so as to provide a tire deformation cavity 172. The tire deformation cavity 172 can have a generally curved profile to follow the circular shape of the wheel 102, as shown for instance in FIG. 2. The tire deformation cavity 172 can also be located immediately below a wheel-engaging bulge 180 projecting outwardly towards the front at a top end of the wheel-facing side 170. This wheel-engaging bulge 180 can be made integral with the main body 150. It provides the main engagement point, hereafter called the bulge engagement point 182, on which the tire 124 of the wheel 102 will initially exert its pressing force at the top of the wheel chock 100 in the event of an unauthorized or accidental maneuver attempt. The main purpose of the tire deformation cavity 172 is to capture as much volume as possible of the tire tread 128 below the wheel-engaging bulge 180 when the wheel 102 is urged forcefully against the wheel chock 100. Other configurations and arrangements are possible. Among other things, the wheel-engaging bulge 180 could be replaced by another feature in some implementations. It is also possible to design the wheel chock 100 without a bulge or a similar feature, or with a bulge having a completely different configuration or purpose. For instance, the bulge can be used as a base for a horizontal lateral bar that projects transversally on the side of the wheel chock 100. This configuration can be useful when there is not enough space to position an entire wheel chock directly in front of a wheel. Other variants are possible as well.

The illustrated wheel-engaging bulge 180 has a non-puncturing shape to prevent the tire 124 from being punctured or be otherwise damaged. It can include a smooth and continuous rounded convex surface extending transversally, as shown. When viewed from the side, the wheel-engaging bulge 180 has a profile that can include a top surface portion and a bottom surface portion, and the approximate medial line at the boundary between these top and bottom surface portions is approximately where the bulge engagement point 182 is located. Other configurations and arrangements are possible. Among other things, other shapes and designs are also possible. For instance, the wheel-engaging bulge 180 can be designed differently. Other variants are possible as well.

The front end of the main body 150 includes an upper front edge 174 extending transversally along a top plate 176 (FIG. 3). This top plate 176 has an upper surface that is configured and disposed to be engaged by the tire tread 128 if the wheel 102 moves against the wheel chock 100 or if the contact area significantly increases in size during the loading process.

The upper front edge 174 is relatively deep within the space between the tire tread 128 and the ground surface. Other configurations and arrangements are possible. Among other things, the front end of the main body 150 can be designed differently in some implementations, including without a top plate 176. Other variants are possible as well.

FIG. 2 shows that in the illustrated example, the horizontal distance A between the tire tread 128 and the bulge engagement point 182 is slightly smaller than the horizontal distance B between the tire tread 128 and the upper front edge 174 of the wheel chock 100. This can be useful because in the event of an unauthorized or accidental maneuver attempt, the wheel 102 can then exert a vertical downward force on the wheel chock 100 at least just before it contacts the bulge engagement point 182. For instance, the wheel chock 100 could have been simply put on a base plate 110 on which there is a layer of ice or packed snow preventing them from fully engaging one another. The local weight applied on the top plate 176 is only a small fraction of the total weight of the vehicle 104 but it is often sufficient to pierce or otherwise break a layer of ice or packed snow. A similar situation can occur when there is sand or small debris of some sort on the base plate 110. Other configurations and arrangements are possible. Among other things, the wheel chock 100 can be designed differently in some implementations, including having the horizontal distance B smaller than the horizontal distance A. Other variants are possible as well.

FIG. 2 further shows the horizontal distance C between the bulge engagement point 182 and the location of the frontmost engagement between a blocking element 112 and a corresponding one of the teeth 160. It also shows the vertical distance D between the bulge engagement point 182 and the ground surface, which is the top surface of the base plate 110 in FIG. 2 since the wheel 102 rests on the base plate 110. The horizontal distance E is between the rearmost end of the wheel chock 100 engaging the ground surface, and the location of the frontmost engagement between a blocking element 112 and a corresponding one of the teeth 160. The horizontal distance F is between the upper front edge 174 and the bulge engagement point 182. The vertical distance G is between the upper front edge 174 and the ground surface. R is the radius of the wheel 102 in an undeformed state.

In general, a wheel chock having a minimum C/D ratio of 0.3, and a minimum E/D ratio of 1.1 will perform much better. Increasing at least one of these ratios is generally desirable, but this can be very challenging because changing one dimension can affect another ratio and/or other factors or parameter, such as the overall weight, the manufacturing costs, the maximum force it can withstand, etc. For instance, increasing the size of a wheel chock will generally increase the overall weight, and there is almost always a maximum chock weight beyond which the wheel chock 100 will be considered too heavy to be handled by most operators. There are also other aspects or goals that those skilled in the art may want to consider when designing a wheel chock, such as a minimum D/R ratio of 0.8 to mitigate the risks of having the wheel 102 rolling over the wheel chock 100. On the other hand, simply making the wheel chock taller to improve the D/R ratio can cause the C/D ratio to fall under 0.3, and this may not be desirable. Designing a relatively small and lightweight wheel chock having a very high rollover resistance and a very high-tipping resistance is often not easy.

It should be noted that the specified ratios and/or factors can be different in some implementations. Other parameters and/or combinations of parameters can be considered. Other variants are possible as well.

If desired, the base plate 110 can include a peripheral slanted rim (not shown) to smooth the edges of the base plate 110. The peripheral rim can also be useful to protect the blocking elements 112 when snow removal operations or similar tasks are conducted. The peripheral rim can include longitudinal and/or transversal rim portions on each section. These rim portions can be welded or otherwise attached on each main plate member 114 during manufacturing and/or during installation. Other configurations and arrangements are possible. Among other things, the peripheral rim can be designed differently in some implementations, and it can also be entirely omitted in others. Other variants are possible as well.

If desired, the base plate 110 can be provided with a heating system (not shown) capable of melting ice and snow in cold weather conditions. This heating system can be for instance in the form of a heated mat, or include electrical wires or pipes with a heating fluid provided within a substructure buried in the ground 106 right under the base plate 110. Other configurations and arrangements are possible. Among other things, the heating system can be designed differently in some implementations, and can be omitted in others. Other variants are possible as well.

If desired, the wheel chock 100 can be connected to an articulated spring-assisted arm in some implementations. Various articulated spring-assisted devices have also been suggested over the years for use with wheel chocks. Examples can be found, for instance, in U.S. Pat. Ser. Nos. 7,032,720, 7,264,092, and 10,864,895, as well as in U.S. patent application publication No. 2021/0261101 A1. An articulated spring-assisted device often includes, among other things, an arm assembly having a proximal arm, a distal arm, and a springloaded mechanism. Such devices can counterbalance at least part of the weight of a wheel chock connected at their free end, thereby helping an operator in positioning the wheel chock on a base plate. The operator may be, for instance, the driver of the vehicle or someone working at the site. An articulated spring-assisted device may also be designed to bring back the wheel chock automatically towards a storage position when the vehicle is authorized to depart, and the wheel chock is removed from the base plate. Bringing wheel chocks back automatically can be desirable because some operators simply put a standalone wheel chock on the side of its base plate and omit or forget to bring it back by hand to the proper storage position where it will be out of the way of pedestrians and vehicles. Other configurations and arrangements are possible. Among other things, articulated spring-assisted devices can be designed differently in some implementations. They can be omitted in others. Various other handling arrangements are also possible, including a handle provided on the wheel chock itself, carts having wheels, etc. Other variants are possible as well.

FIG. 4 is a rear isometric view illustrating an example of a wheel chock 100 having a longitudinal extension 200 in accordance with the proposed concept. This extension 200 is provided along the bottom of the wheel chock 100 and includes, among other things, a portion 210 protruding beyond the front end of the main body 150 in a direction that is generally parallel to the longitudinal axis 108. It also includes a base portion 212 that is laterally adjacent to the bottom of the main body 150. The protruding portion 210 can define a marginally downward angle with reference to its base portion 212, and it can also decrease in height towards the free end thereof, as shown. Most of the parts of the extension 200, if not all of them, are made of a strong rigid material, such as a metallic material. Other configurations and arrangements are possible. Among other things, the protruding portion 210 and the base portion 212 of the extension 200 can be designed differently in some implementations. The extension 200 can include one or more nonmetallic materials. While the wheel chock 100 in FIG. 4 and the ones shown in other figures are essentially configured for use on one side (e.g., the left side) of the vehicle 104, the ones for use on the opposite side (e.g., the right side) of the vehicle 104 will generally be substantially mirror symmetrical to those illustrated. They are not separately illustrated only for the sake of brevity. Other variants are possible as well.

In use, the wheel chock 100 can be positioned so that the protruding portion 210 of the extension 200 extends along the tire sidewall 126 of the corresponding wheel 102 over a relatively long distance. This allows the wheel chock 100 to engage one or more blocking elements 112 located beyond the front end of the main body 150, which is something that was not previously possible because of inherent physical limitations. The presence of the extension 200 increases the efficiency of the wheel chock 100 by increasing the horizontal distance between the bulge engagement point 182 and the location of the frontmost engagement between a blocking element 112 and a corresponding one of the teeth 160. This dimension is the equivalent of horizontal distance C in FIG. 2.

While moving the frontmost engagement between a blocking element 112 and a tooth 160 further away from the bulge engagement point 182 is a very desirable feature, the extension 200 can also be useful for other reasons. Among other things, it can give more flexibility to designers and even allow the main body 150 of the wheel chock 100 to have a shorter front end without significantly decreasing its efficiency. Having a shorter front end, for instance one that is shorter of the equivalent of one tooth 160, could be a desirable feature in some implementations to mitigate the risks of having the wheel chock 100 completely stuck under the tire 124 after a significant increase of the vehicle weight. This can be particularly useful for a wheel chock restraint system that includes an arrangement for automatically positioning and removing the wheel chock 100 on the base plate 110. With the extension 200, the front end of the main body 150 can be made shorter for the sake of simplicity. A shorter front end also keeps the wheel 102 on the ground surface, thereby preventing the vertical distance D in FIG. 2 from decreasing. This vertical distance D decreases slightly when the wheel 102 rolls over the top plate 176 (FIG. 3) since its upper surface is vertically above the ground surface. Even a small decrease can be enough to overcome the wheel chock 100 if there is a very intense and powerful maneuver attempt. A shorter front end, however, may prevent the local weight of the vehicle 104 to push the wheel chock 100 through a layer of ice or packed snow, for instance, but this can be mitigated by using heaters or other systems to melt the ice or snow on the base plate 110. This may also not be necessary in regions where the climate is not prone to the accumulation of ice or snow, or when a wheel chock restraint system is installed indoors. Other configurations and arrangements are possible. Among other things, the front end of the main body 150 can be made shorter for other reasons, and an automatic positioning arrangement can be implemented without necessarily having a shorter front end. Other variants are possible as well.

It will be understood that the use of a wheel chock as described herein is particularly advantageous in regions experiencing icy or snowy weather. The front end of the wheel chock 100 may be configured to receive at least a portion of the wheel 102, such that the wheel 102 exerts a local weight on the wheel chock 100, causing the teeth 160 to pierce through the snow or ice. As stated above, this may reduce the effective height of the wheel chock 100. Providing an extension 200 increases the force resistance of wheel chock 100. Accordingly, the height of the wheel chock 100 used in icy or snowy conditions may be increased without deleteriously affecting its tipping resistance, thus restoring the effective height needed for optimal operation of the wheel chock 100.

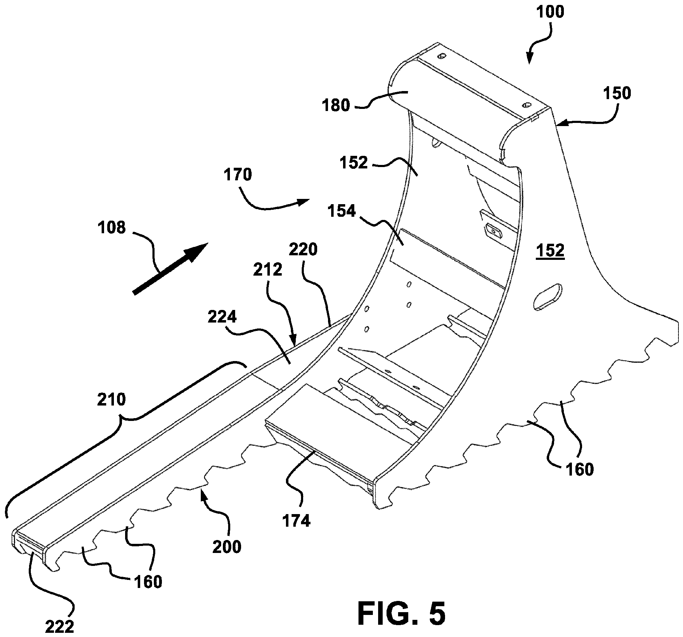

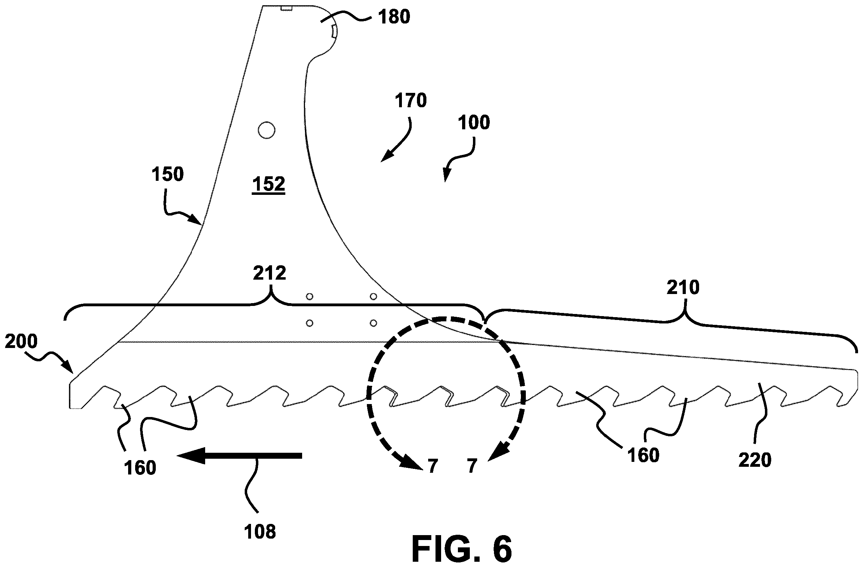

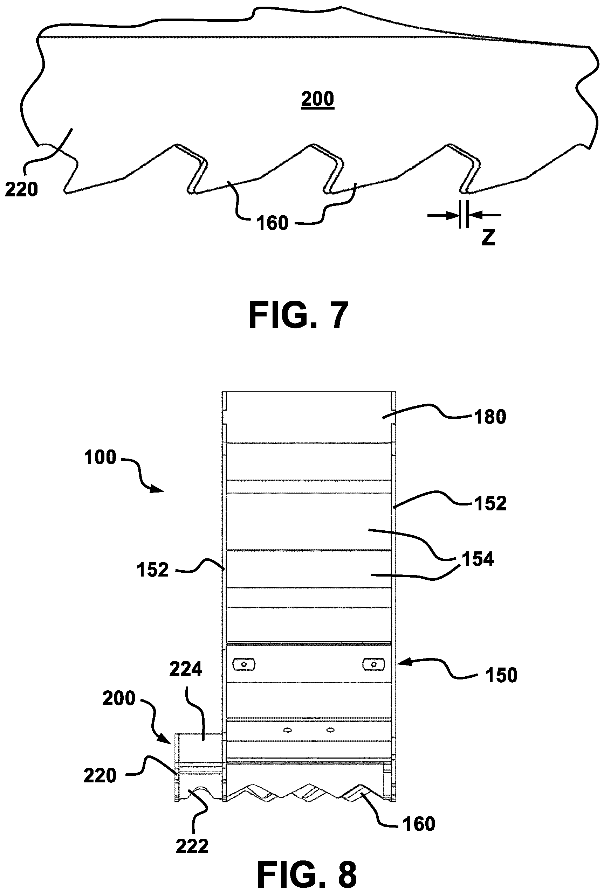

FIG. 5 is a front isometric view of the wheel chock 100 in FIG. 4, and FIG. 6 is a side view thereof. As can be seen, the front end of one of the side members 152, namely the one on the exterior side, includes an elongated front section. The exterior side member 152 is then significantly longer compared to the interior one of the illustrated wheel chock 100. This elongated front section forms a part of the extension 200. The extension 200 also includes a lateral member 220 disposed substantially parallel next to the bottom of the exterior side member 152. The lateral member 220 can be rigidly attached to the exterior side member 152 using an intervening substructure, for instance one including a plurality of transversally extending brackets 222 (see also FIG. 8) spanning at various spaced apart locations along the extension 200, as shown. At least some of these brackets 222 can be subparts of the teeth 160. The illustrated extension 200 also includes an elongated horizontally disposed top strip 224 covering the top side of the extension 200. Other configurations and arrangements are possible. Among other things, the extension 200 can be designed differently in some implementations. In its simplest form, the extension 200 can include only a protruding portion 210 formed by the elongated front section of the exterior side member 152 under which at least one additional tooth 160 is provided beyond the upper front edge 174. The extension 200 may not necessarily always be at least partially made integral with the main body 150 of the wheel chock 100. For instance, it can be a completely independent part or assembly of parts that is affixed to the main body 150, and it can also be implemented as a retrofit kit to be installed on other models of wheel chocks, including older ones. The intervening substructure of the extension 200 can be in the form of a longitudinally extending beam having a rectangular cross-section. The parts or groups of parts can be rigidly attached together and/or to the main body 150 by welding and/or using mechanical fasteners. The extension 200 can be rigidly attached to the main body 150 through an intervening element, such as a longitudinally extending beam having a rectangular cross-section. Another one among the numerous possibilities is to create the extension 200 using a solid bar that is molded and/or machined into its final shape. The extension 200 can be made removable from the main body 150. Other variants are possible as well.

In the example shown in FIGS. 4 to 6, both the front elongated section of the exterior side member 152 and the lateral member 220 are essentially flat rectilinear upstanding workpieces. They include subparts forming the additional teeth 160 provided under the protruding portion 210 of the extension 200. These teeth 160 continue the pattern of at least some of the teeth 160 provided elsewhere on the wheel chock 100 and for this reason, they are identified using the same reference numeral. The base portion 212 of the illustrated extension 200 is provided on the lateral side of the main body 150 and extends interruptedly over the entire length thereof. The lateral member 220 includes subparts matching the corresponding subparts of each tooth 160 along the main body 150. Other configurations and arrangements are possible. Among other things, the extension 200 can be designed differently in some implementations. The design and layout of the teeth 160 under at least a part of the extension 200 can be different from that what is shown and described. The base portion 212 of the extension 200 can be shorter than the main body 150 in some implementations, and the extension 200 can even include another portion protruding at the rear end in others. The lateral member 220 can be designed differently. Other variants are possible as well.

FIG. 7 is an enlarged fragmentary view of some of the teeth 160 on the wheel chock 100 shown in FIG. 6. It shows that at least some of the subparts on the lateral member 220 can be slightly offset towards the front of the wheel chock 100 with reference to the corresponding subparts on a same row. This offset is schematically depicted in FIG. 7 as the horizontal distance Z. This horizontal distance Z can be for instance about 0.0625 in (1.6 mm). Only the first three teeth 160 at the front that also have subparts under the main body 150 are offset in the illustrated example. The subparts of each of these teeth 160 are aligned along an axis that is then not entirely perpendicular to the longitudinal axis 108.

This feature allows counterbalancing at least in part the moment of force created when the wheel chock 100 and the wheel 102 are not centered. Other configurations and arrangements are possible. Among other things, the indicated value of the horizontal distance Z is only an example, and other values are possible. The lateral offset can be done for only some of the teeth 160 or for all teeth 160. Still, this lateral offset feature can be entirely omitted in some implementations. Other variants are possible as well.

FIG. 8 is a front view of the wheel chock 100 in FIG. 4.

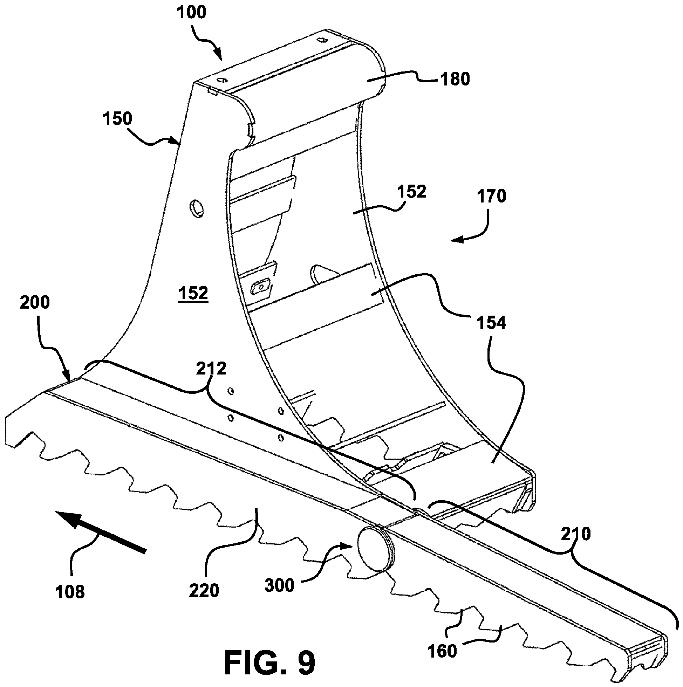

FIG. 9 is a front isometric view of another example of a wheel chock 100 having a longitudinal extension 200 in accordance with the proposed concept. As can be seen, the extension 200 of this example includes a sturdy hinge 300 provided between the base portion 212 and its protruding portion 210. The hinge 300 can be designed to allow the protruding portion 210 to pivot upwards and/or downwards over a few degrees, for instance over 5 degrees in both directions with reference to the horizontal or to a medial position. Adjusting the angle of at least a portion of the extension 200 can be useful, for instance, where there is a change in the inclination angle of the base plate 110 caused by variations of the slope in the ground surface or by a local deformation of the base plate 110. The hinge 300 can include a transversally and horizontally disposed pin to pivotally attach the mating ends of the corresponding parts, and these mating ends can be designed to provide the necessary clearance for the pivotal motion. Other configurations and arrangements are possible. Among other things, the hinge 300 can be designed differently in some implementations, including without a pin. The hinge 300 can also be positioned elsewhere along the extension 200 and accordingly, it is not necessarily at the junction between the protruding portion 210 and the base portion 212. The hinge 300 or an equivalent could even be provided between the main body 150 and the extension 200. Still, the extension 200 shown in the other examples can be designed to include a hinge 300. Other variants are possible as well.

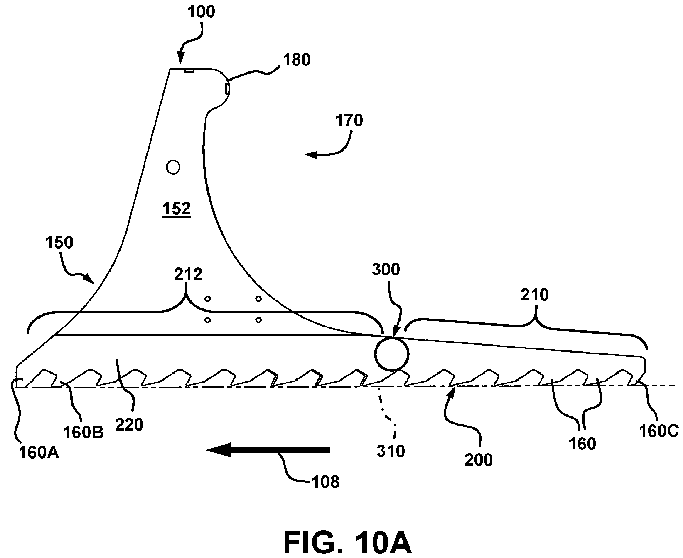

FIG. 10A is a side view of the wheel chock 100 in FIG. 9. It shows the extension 200 at a medial position where the bottommost surfaces or edges under the teeth 160 are substantially coplanar. The phantom line 310 depicts the top surface of the base plate 110 (see for instance FIG. 2). The last two rearmost teeth of this wheel chock 100, which are identified as at tooth 160A and tooth 160B in FIG. 10A for the sake of explanation, include a corresponding bottom surface that is configured and disposed to engage the base plate top surface. A similar configuration can be seen in other illustrated examples, and it is thus not specific to the implementation where the hinge 300 is present. As can be seen, the bottom surfaces of the teeth 160A, 160B are somewhat parallel to the base plate top surface. They allow a major proportion of the vertical forces to be transferred from the wheel chock 100 to a base plate 110 during an unauthorized or accidental maneuver attempt. The bottom edge of at least some of the other teeth 160 may engage the base plate top surface but in the illustrated example, the surface area engaging the base plate top surface is often smaller. The tip of some of the teeth 160 may also be configured and disposed to remain slightly above the base plate top surface. The frontmost tooth 160C of the extension 200 can include a larger bottom surface area compared to the other teeth 160 under the extension 200, as shown. Other configurations and arrangements are possible. Among other things, the extension 200 can be designed differently in some implementations, including without a relatively large bottom surface under one or more among the rearmost teeth of the wheel chock 100 and/or under one or more of the frontmost teeth of its extension 200. Other variants are possible as well.

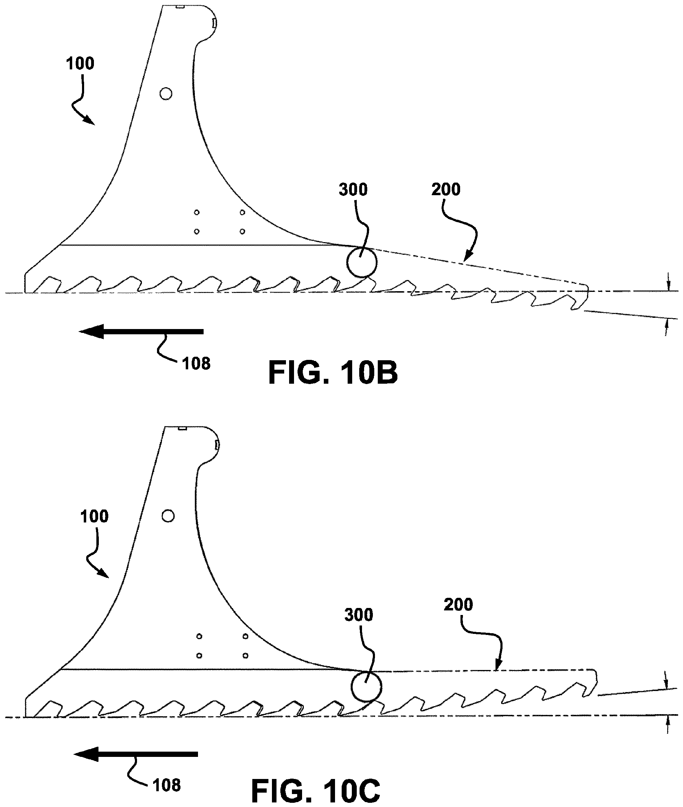

FIGS. 10B and 10C are views similar to FIG. 10A showing the protruding portion 210 of the extension 200 at examples of limit positions. It is pivoted downwards in FIG. 10B and upwards in FIG. 10C. Other configurations and arrangements are possible. Among other things, it is possible to design the hinge 300 to pivot only upwards or only downwards with reference to a medial position, and/or without having something limiting the range of angles in at least one angular direction. Other variants are possible as well.

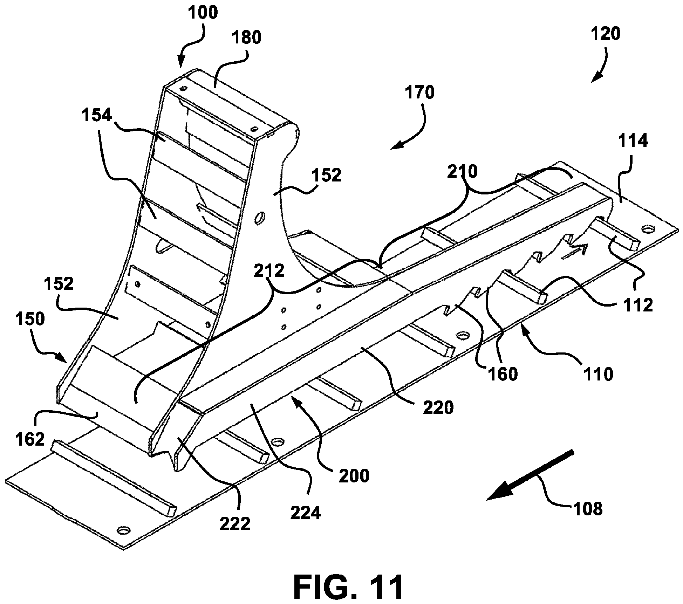

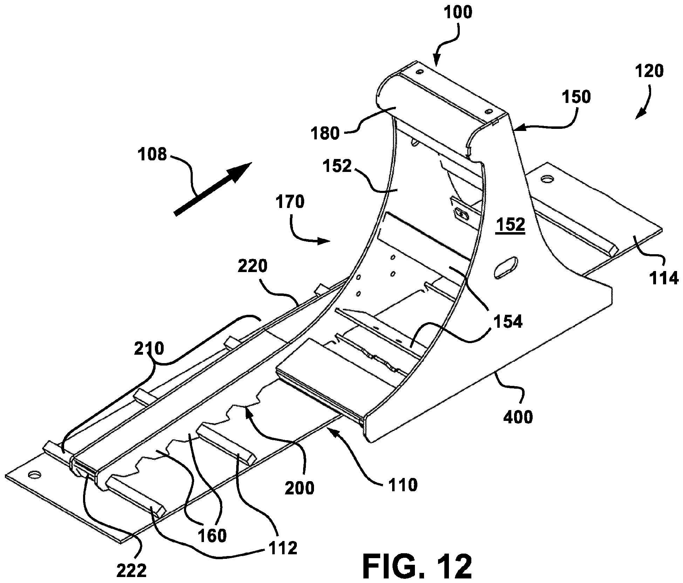

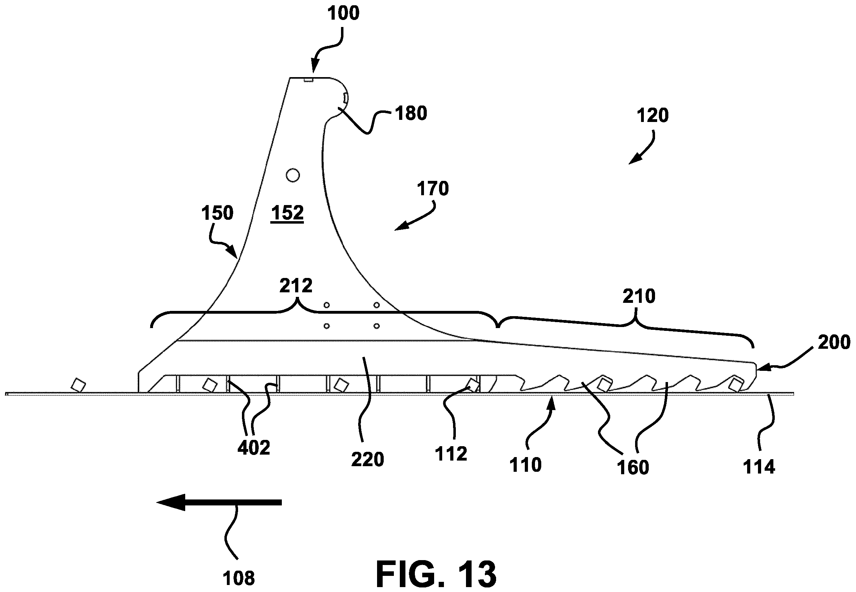

FIG. 11 is a rear isometric view of another example of a wheel chock 100 having a longitudinal extension 200 in accordance with the proposed concept. This wheel chock 100 is shown being in a latching engagement with an example of a base plate 110. FIGS. 12 and 13 are, respectively, a front isometric view and a side view of the wheel chock 100 in FIG. 11. The base plate 110 is also shown in FIGS. 12 and 13. This implementation can be used as a complement for an automatic positioning arrangement, in particular one where the mechanism of the automatic positioning arrangement can already hold the wheel chock 100 during an unauthorized or accidental maneuver attempt, but only up to a certain force intensity. The base plate 110 and the extension 200 can then be provided to further increase its resistance. Teeth 160 are only provided under the protruding portion 210 of the extension 200 to facilitate the handling by the automatic positioning arrangement. It will be understood that in icy or snowy weather conditions, an automatic wheel chock positioning arrangement is most advantageously used in combination with heating elements providing for ready engagement between the wheel chock and a base plate or other blocking means.

In the example shown in FIGS. 11 to 13, teeth 160 are only present under the protruding portion 210 of the extension 200, and the base plate 110 is also narrower compared for instance to the one of the wheel chock 100 shown in FIG. 3. This wheel chock 100 is designed so that only a portion of its exterior side will be placed above the base plate 110, and they extend laterally beyond the side edge of the base plate 110. The bottom longitudinal edge 400 (FIG. 12) along the interior side member 152 can engage the ground surface next to the base plate 110, but on the opposite side of the main body 150, the bottom longitudinal edges of the corresponding parts extend vertically above the top of the blocking elements 112. There are no teeth or other features that can interact with the blocking elements 112 located under most of the main body 150, only a plurality of spaced apart transversally extending ribs 402 (FIG. 13). The bottom edges of these ribs 402 engage the top surface of the base plate 110 to support the weight, and there is also the rearmost portion of the main body 150 that engages the top surface of the base plate 110. These ribs 402 and the rearmost portion of the main body 150 are designed to be away from the nearby blocking elements 112. Other configurations and arrangements are possible. Among other things, the wheel chock 100 illustrated in FIGS. 11 to 13 can be designed differently. Other variants are possible as well.

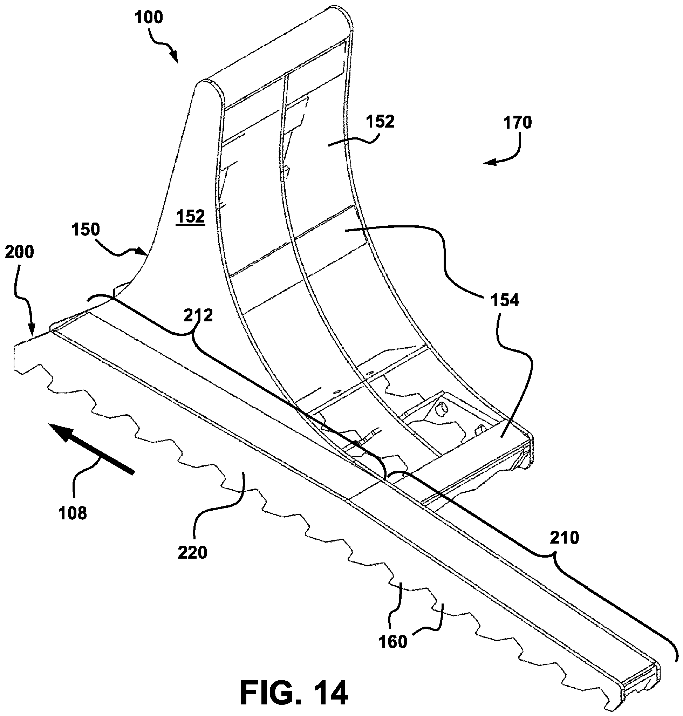

FIG. 14 is a front isometric view of another example of a wheel chock 100 having a longitudinal extension 200 in accordance with the proposed concept. As can be seen, this wheel chock 100 does not include a bulge. This configuration can be useful where the space is very limited. The space limitation can be the result, for instance, of the presence of a mudguard, an underride guard, an adjacent wheel set, or another feature or structure. Other configurations and arrangements are possible. Among other things, the design of the wheel chock 100 shown in FIG. 14 can be different in some implementations. Other variants are possible as well.

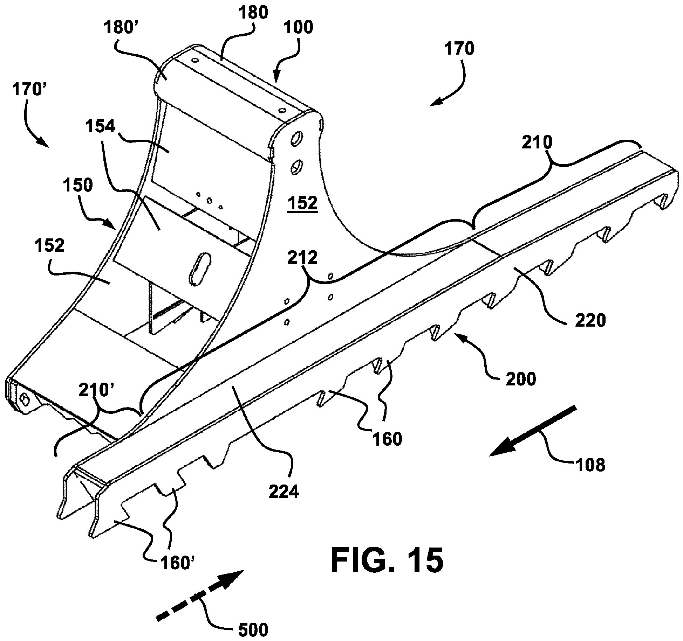

FIG. 15 is a first front isometric view illustrating another example of a wheel chock 100 having a longitudinal extension 200 in accordance with the proposed concept. This wheel chock 100 is a bidirectional model. Further details on bidirectional wheel chocks can be found, for instance, in U.S. Pat. No. 10,793,119.

Bidirectional wheel chocks can be useful, among other things, to block vehicles when they can depart and/or arrive in both the forward and rearward travel directions. They have two wheel-facing sides 170, 170', and two bulges 180, 180'. The forward travel direction generally corresponds to the direction shown by the arrow depicting the longitudinal axis 108. The rearward travel direction 500 is depicted in FIG. 15 and in subsequent figures. It is a direction that is generally parallel but diametrically opposite to that of the longitudinal axis 108.

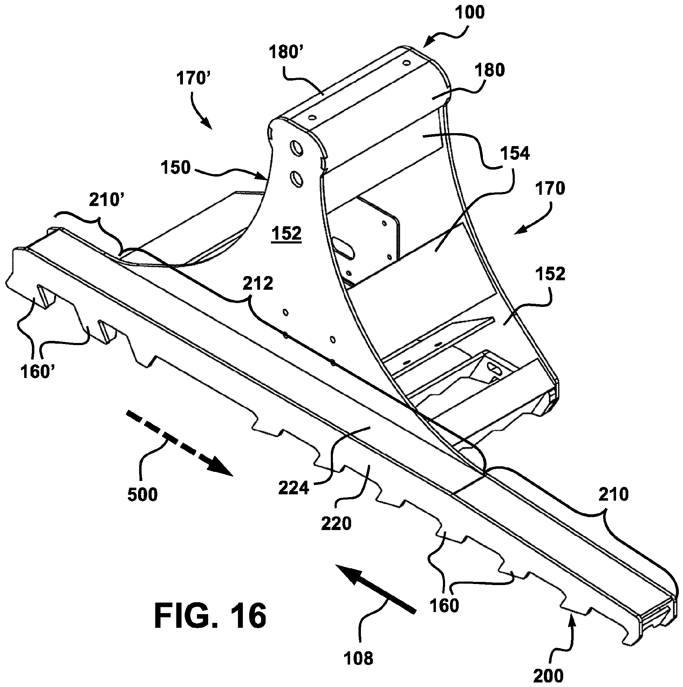

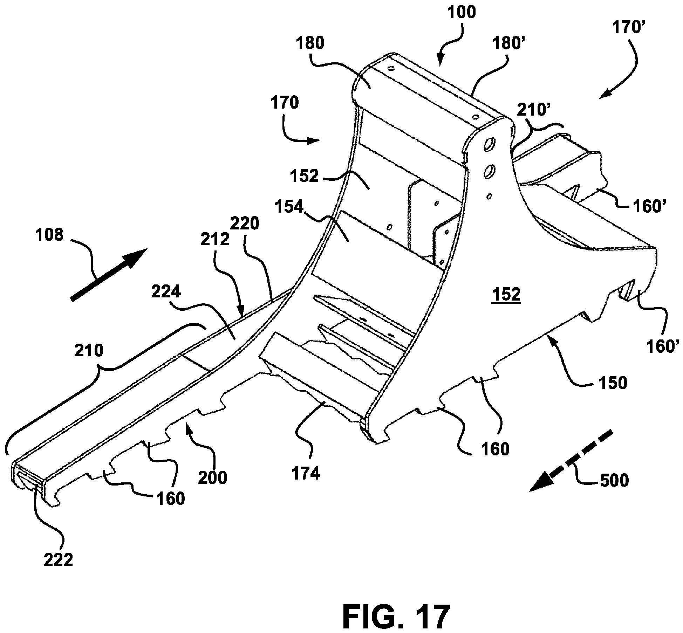

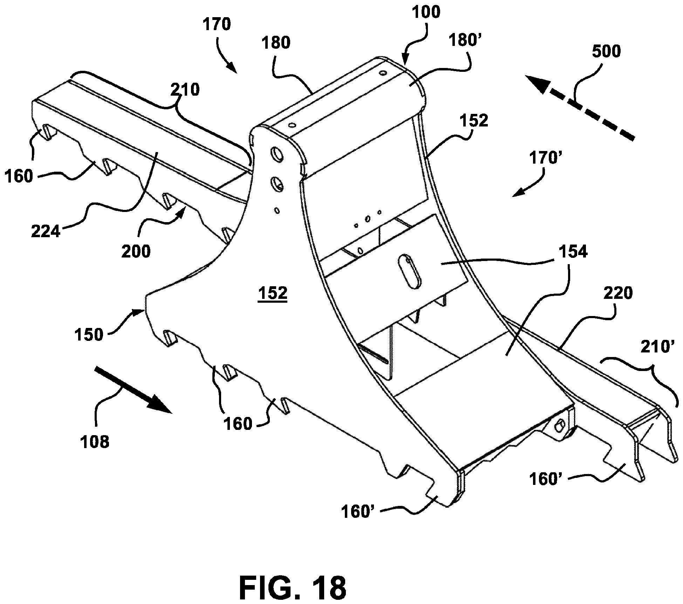

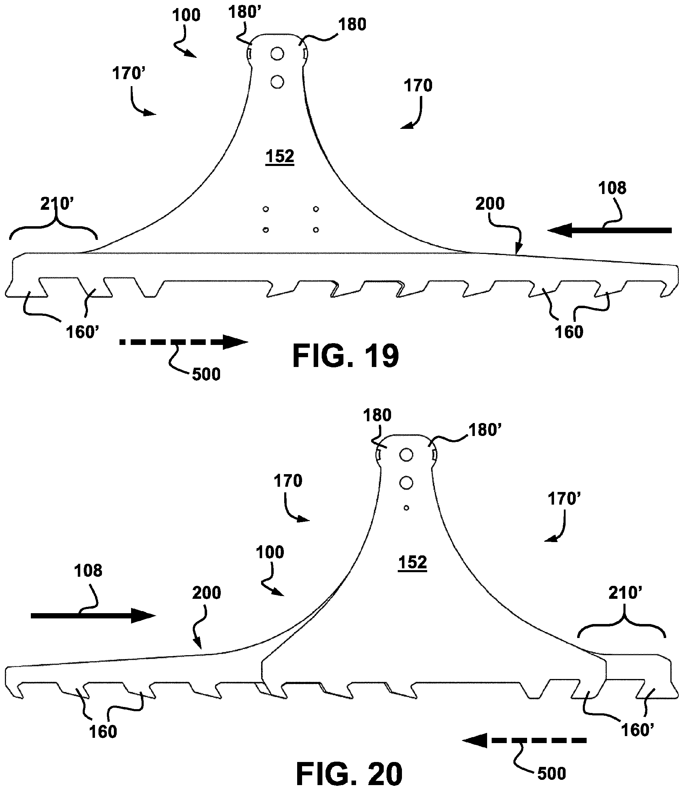

FIGS. 16 to 18 are, respectively, a first front isometric view, a second front isometric view and a second rear isometric view of the wheel chock 100 in FIG. 15. FIGS. 19 and 20 are, respectively, a first and a second side view thereof. These figures illustrate the bidirectional wheel chock 100 of FIG. 15 from various viewpoints. FIG. 19 shows the bidirectional wheel chock 100 as viewed from the exterior side, and FIG. 20 shows the bidirectional wheel chock 100 as viewed from the interior side.

The illustrated bidirectional wheel chock 100 includes a group of two teeth 160' oriented in the opposite direction compared to the other teeth 160 provided under the protruding portion 210 of the extension 200 and elsewhere under the wheel chock 100. The two teeth 160' of this group are provided under a second protruding portion 210' that is shorter than the first one. These teeth 160' are configured and disposed to create a latching engagement with a corresponding one of the blocking elements 112 on the base plate 110 when a wheel exerts a force from the corresponding wheel-facing side 170'. Other configurations and arrangements are possible. Among other things, the bidirectional wheel chock 100 can be designed differently in some implementations, for instance without a bulge on one or both sides. The teeth under the bidirectional wheel chock 100 can also be designed differently. For instance, the wheel chock 100 can include opposite sides that are symmetrical or almost symmetrical. Other variants are possible as well.

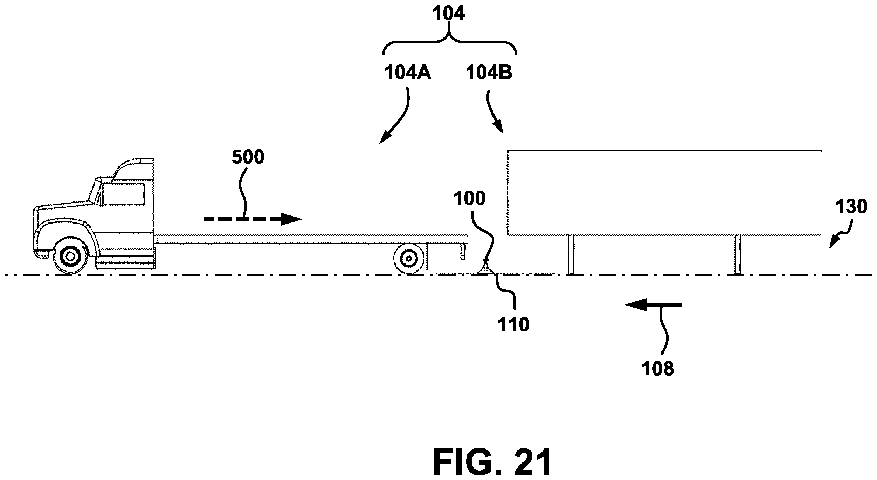

FIG. 21 is a semi-schematic view of the wheel chock 100 in FIG. 15. with an example of a vehicle 104 having a swap body configuration. It shows another possible implementation for the wheel chock 100, bidirectional or not. It is thus not limited to the wheel chock 100 of the example shown in FIGS. 15 to 20.

A vehicle having a swap body configuration includes essentially two basic parts, namely a chassis 104A and a container 104B that can be selectively detached from the chassis 104A. The chassis 104A is the motorized part, and the container 104B includes the cargo compartment. The two basis parts are shown unconnected in FIG. 21, and the wheel chock 100 is positioned between them. The container 104B has supporting legs to keep it above the ground surface when detached from the chassis 104A, and the chassis 104A can back up to position its rear frame section directly under the container 104B. Once in position, the container 104B can be attached to the chassis 104A and then carried away once the legs of the container 104B are a stowed position. The chassis 104A is generally designed to cooperate with more than one container 104B, and vice versa. For instance, the chassis 104A can transport the container 104B at a first location, detach from the container 104B once at the first location and move away from it, then pick up another container 104B at a second location, and the container 104B at the first location can be picked up subsequently by another chassis 104A.

The bidirectional wheel chock 100 can be used for preventing the chassis 104A from moving away in a departure direction, for instance when parked at the loading dock 130 (FIG. 1), and also for preventing it from moving into the loading dock 130, for instance, to get under the container 104B standing on its supporting legs as shown in FIG. 21, in a rearward travel direction 500. When the chassis 104A is parked at the loading dock 130, the wheel chock 100 can prevent it from leaving, with or without the container 104B. The wheel chock 100 can also prevent the chassis 104A from moving into the loading dock 130 when the container 104B is already present, on its supporting legs, and even when no container 104B is present. Other configurations and arrangements are possible. Among other things, the vehicle 104 as illustrated in FIG. 21 is only an example and a vehicle having a swap body configuration can be designed differently in some implementations. The wheel chock 100 for use with a vehicle having a swap body configuration does not necessarily need to be a bidirectional model. Other variants are possible as well.

As can be seen, FIG. 21 further shows that the wheel chock 100, bidirectional or not, can be in a working position on the base plate 110 without necessarily being adjacent to a wheel or to another feature.

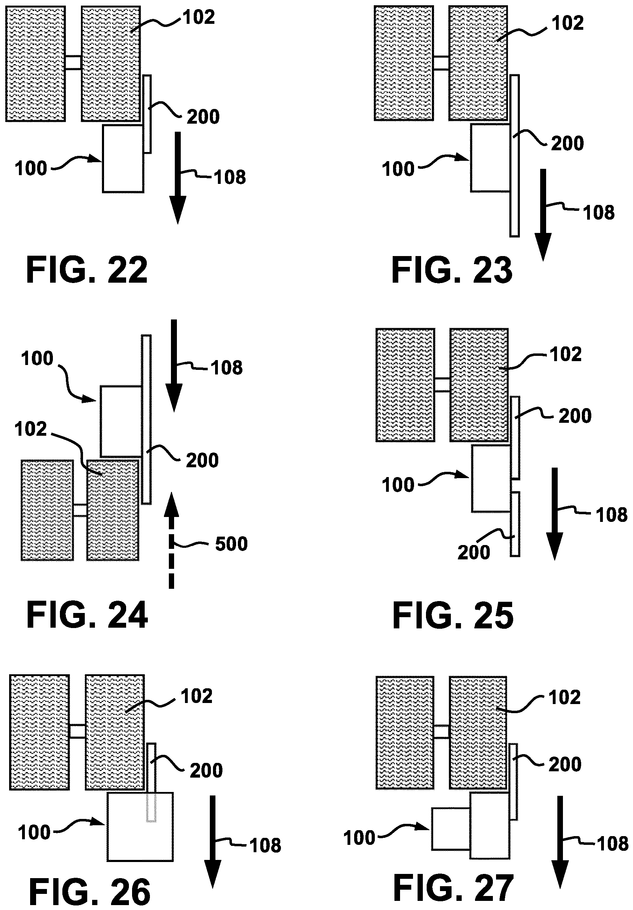

FIGS. 22 to 27 are schematic top views illustrating examples of configurations. These features can be implemented on a single-sided wheel chock and/or a bidirectional wheel chock. FIGS. 22 to 27 also show examples where the wheel 102 is part of a dual-wheel arrangement, the right wheel being for instance on the exterior side, and the left wheel being on the interior side. Many other configurations are possible. Still, one or more of the features from each example could be combined with one or more features shown in the other examples, including the examples presented in the preceding figures. Other variants are possible as well.

In FIG. 22, the wheel chock 100 includes a longitudinal extension 200 having an example of a base portion that is longitudinally shorter than the main body.

FIG. 23 shows a bidirectional wheel chock 100 that includes a longitudinal extension 200 having two opposite protruding portions, each projecting from a corresponding end on a common base portion. A single-sided wheel chock could also be configured and disposed as shown.

FIG. 24 shows the bidirectional wheel chock 100 of FIG. 23, but this wheel chock 100 is positioned on the other side of the wheel 102 to prevent it from moving in a rearward travel direction 500, for instance if the vehicle attempts to move into a loading dock.

In FIG. 25, the wheel chock 100 includes two spaced apart extensions 200 on the exterior side that are oriented in opposite directions. They thus have a shorter base portion, like in FIG. 22.

In FIG.26, the wheel chock 100 includes a longitudinal extension 200 that is not placed next to one of the lateral sides of the main body.

In FIG. 27, the wheel chock 100 includes two abutting portions having unequal sizes, one being longer and taller than the other, and the longitudinal extension 200 is provided on the lateral side of the larger portion. Having both a large and a small portion on the same wheel chock 100 can be useful when there are different kinds of vehicles at a same location and these vehicles have wheels that are widely dissimilar in size.

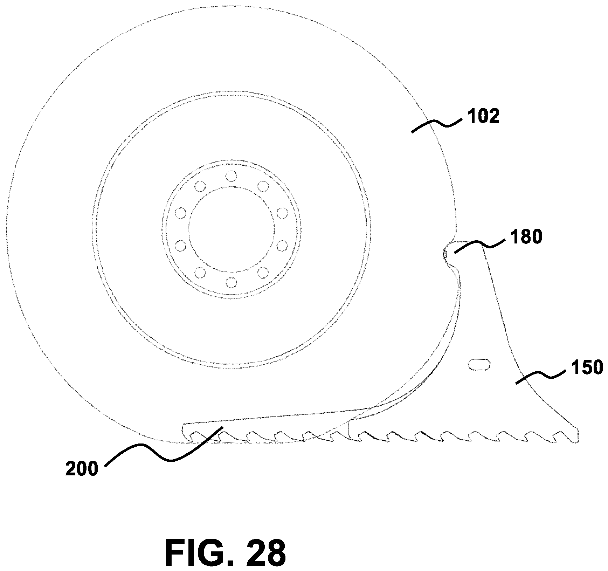

FIG. 28 shows an exemplary advantageous use of a wheel chock as described herein. A wheel 102 exerting pressure on a wheel chock 100, comprising a main body 150, a bulge 180 and an extension 200 undergoes a deformation, thus reducing the force available to overcome the wheel chock 100. Particularly advantageously, the extension 200 extending alongside a side wall of the wheel 102 provides the wheel chock 100 with an increased ability to resist the longitudinal force of the wheel 102. Accordingly, the wheel 102 will undergo a higher degree of deformation before engaging the bottom portion of the wheel chock 100.

### LIST OF REFERENCE NUMERALS

- 100: wheel chock
- 102: wheel
- 102': wheel
- 104: vehicle
- 104A: chassis (swap body)
- 104B: container (swap body)
- 106: ground
- 108: longitudinal axis
- 110: base plate
- 112: blocking element
- 114: main plate member
- 120: wheel chock restraint system
- 122: rim
- 124: tire
- 126: tire sidewall
- 128: tire tread
- 130: loading dock
- 132: wall
- 134: cushion
- 140: cargo compartment
- 142: dock door
- 144: floor (of the cargo compartment)
- 146: floor (in front of the garage door)
- 150: main body (of the wheel chock)
- 152: side member
- 154: transversal member
- 160: tooth
- 160': tooth
- 160A, 160B, 160C: tooth (in FIG. 10A)
- 162: flange or blade
- 170: wheel-facing side
- 170': wheel-facing side
- 172: tire deformation cavity
- 174: upper front edge
- 176: top plate
- 180: wheel-engaging bulge
- 180': wheel-engaging bulge
- 182: bulge engagement point
- 200: extension
- 210: protruding portion (of the extension)
- 210': protruding portion (of the extension)
- 212: base portion (of the extension)
- 220: lateral member
- 222: transversally extending bracket
- 224: elongated horizontally disposed top strip
- 300: hinge
- 310: phantom line (in FIG. 10A)
- 400: bottom edge
- 402: rib
- 500: rearward travel direction

## Claims

1. A wheel chock (100) comprising:
a substantially rigid main body (150) configured to engage a wheel tire (124) of a vehicle (104) to prevent movement of a vehicle wheel (102);
said main body (150) having a sloped top wheel-facing side (170) configured to receive in overlay and abutment said wheel tire (124);
said main body (150) having a base comprising an underside with a first plurality of downwardly projecting teeth elements (160) configured to releasably engage a corresponding ground-anchored retention plate (110) having protrusions, such as ribs, ridges or the like (112), for engagement with said teeth elements (160) and, in use, to resist movement of the wheel chock (100) and vehicle wheel (102) once said teeth (160) are engaged on said retention plate (110) and as the wheel tire (124) applies pressure to the top wheel-facing side (170) of the main body (150);
**characterized in that** said main body is being further provided with at least one extension member (200) extending from said base and longitudinally from the main body, the at least one extension member (200) being configured, in use, to lie adjacent to at least a portion of a side wall of the wheel tire (126), the at least one extension member (200) further comprising a second plurality of teeth elements (160) also configured to releasably engage said corresponding ground-anchored retention plate (110) having protrusions (112) for engagement with said teeth elements and to further resist movement of the wheel chock (100) and vehicle wheel (102).

2. The wheel chock (100) according to claim 1, further comprising a wheel tire-engaging resilient spacer.

3. The wheel chock (100) according to any one of claims 1 and 2, further comprising a wheel tire-engaging bulge (180), the bulge protruding from an upper portion of the main body and configured to engage a portion of the wheel tire (124).

4. The wheel chock (100) according to any one of claims 1 to 3, wherein the main body is monolithic.

5. The wheel chock (100) according to any one of claims 1 to 4, wherein the at least one extension member (200) extends along at least a portion of a side of the main body (152).

6. The wheel chock (100) according to any one of claims 1 to 5, wherein the at least one extension member is formed integrally with the main body.

7. The wheel chock (100) according to any one of claims 1 to 5, wherein the at least one extension member is coupled to the main body.

8. The wheel chock (100) according to any one of claims 1 to 5, wherein each of the at least one extension member is pivotably coupled to said main body.

9. A wheel chock restraint system comprising:
a wheel chock (100) according to claim 1, and
a corresponding ground-anchored base plate (110) configured to be disposed under a wheel tire (124) and under said wheel chock (100), and configured to mechanically engage the teeth elements of the wheel chock (160).

10. The wheel chock restraint system according to claim 9, wherein the ground-anchored base plate (110) comprises heating means sufficient to melt snow or ice.

11. The wheel chock restraint system according to any one of claims 9 and 10, wherein the ground-anchored base plate (110) is configured to be removably anchored to the ground (106).

12. The wheel chock restraint system according to any one of claims 9 to 11, comprising a plurality of ground-anchored base plates (112).

13. The wheel chock restraint system according to any one of claims 9 to 12, further comprising spring-assisted means configured to move the wheel chock (100) into and out of engagement position on said ground-anchored base plate (110).

14. The wheel chock restraint system according to claim 13 wherein the spring-assisted means is a retractable arm.

15. The wheel chock restraint system according to claim 14 wherein the retractable arm is motorized.

## Patentansprüche

1. Radkeil (100), umfassend:
einen im Wesentlichen starren Hauptkörper (150), der so gestaltet ist, dass er mit einem Radreifen (124) eines Fahrzeugs (104) in Eingriff kommt, um eine Bewegung eines Fahrzeugrads (102) zu verhindern;
wobei der Hauptkörper (150) eine dem Rad (170) zugewandte schräge obere Seite hat, die so gestaltet ist, dass sie den Radreifen (124) übereinanderliegend und anliegend aufnimmt;
wobei der Hauptkörper (150) eine Basis aufweist, die eine Unterseite mit einer ersten Vielzahl von nach unten vorstehenden Zahnelementen (160) umfasst, die so gestaltet sind, dass sie lösbar mit einer entsprechenden bodenverankerten Halteplatte (110) in Eingriff kommen, die Vorsprünge wie Rippen, Grate oder dergleichen (112) aufweist, zum Eingriff mit den Zahnelementen (160) und, im Gebrauch, um einer Bewegung des Radkeils (100) und des Fahrzeugrads (102) zu widerstehen, sobald die Zähne (160) mit der Halteplatte (110) in Eingriff sind und der Radreifen (124) Druck auf die obere, dem Rad zugewandte Seite (170) des Hauptkörpers (150) ausübt; **dadurch gekennzeichnet, dass** der Hauptkörper ferner mit mindestens einem Verlängerungsglied (200) versehen ist, das sich von der Basis und in Längsrichtung des Hauptkörpers erstreckt, wobei das mindestens eine Verlängerungsglied (200) so gestaltet ist, dass es im Gebrauch an mindestens einem Abschnitt einer Seitenwand des Radreifens (126) anliegt, wobei das mindestens eine Verlängerungsglied (200) ferner eine zweite Vielzahl von Zahnelementen (160) umfasst, die ebenfalls so gestaltet sind, dass sie lösbar in die entsprechende bodenverankerte Halteplatte (110) eingreifen, die Vorsprünge (112) für den Eingriff mit den Zahnelementen aufweist und ferner einer Bewegung des Radkeils (100) und des Fahrzeugrads (102) widersteht.

2. Radkeil (100) nach Anspruch 1, der außerdem einen elastischen Abstandshalter umfasst, der in den Radreifen eingreift.

3. Radkeil (100) nach einem der Ansprüche 1 oder 2, ferner mit einer in den Radreifen eingreifenden Ausbuchtung (180), wobei die Ausbuchtung von einem oberen Abschnitt des Hauptkörpers vorsteht und so gestaltet ist, dass sie in einen Abschnitt des Radreifens (124) eingreift.

4. Radkeil (100) nach einem der Ansprüche 1 bis 3, bei dem der Hauptkörper monolithisch ist.

5. Radkeil (100) nach einem der Ansprüche 1 bis 4, bei dem sich das mindestens eine Verlängerungsglied (200) entlang mindestens eines Abschnitts einer Seite des Hauptkörpers (152) erstreckt.

6. Radkeil (100) nach einem der Ansprüche 1 bis 5, bei dem das mindestens eine Verlängerungsglied einstückig mit dem Hauptkörper ausgebildet ist.

7. Radkeil (100) nach einem der Ansprüche 1 bis 5, bei dem das mindestens eine Verlängerungsglied mit dem Hauptkörper gekoppelt ist.

8. Radkeil (100) nach einem der Ansprüche 1 bis 5, wobei jedes des mindestens einen Verlängerungsglieds schwenkbar mit dem Hauptkörper gekoppelt ist.

9. Radkeil-Rückhaltesystem mit:
einem Radkeil (100) nach Anspruch 1, und
einer entsprechenden bodenverankerten Grundplatte (110), die so gestaltet ist, dass sie unter einem Radreifen (124) und unter dem Radkeil (100) angeordnet werden kann, und so ausgelegt ist, dass sie mechanisch mit den Zahnelementen des Radkeils (160) in Eingriff kommt.

10. Radkeil-Rückhaltesystem nach Anspruch 9, bei dem die bodenverankerte Grundplatte (110) eine Heizeinrichtung umfasst, die ausreicht, um Schnee oder Eis zu schmelzen.

11. Radkeil-Rückhaltesystem nach einem der Ansprüche 9 oder 10, bei dem die bodenverankerte Grundplatte (110) so gestaltet ist, dass sie lösbar am Boden (106) verankert werden kann.

12. Radkeil-Rückhaltesystem nach einem der Ansprüche 9 bis 11, das eine Vielzahl von bodenverankerten Grundplatten (112) umfasst.

13. Radkeil-Rückhaltesystem nach einem der Ansprüche 9 bis 12, das außerdem ein federunterstütztes Mittel umfasst, das so gestaltet ist, dass es den Radkeil (100) in eine und aus einer Eingriffsposition auf der bodenverankerten Grundplatte (110) bewegt.

14. Radkeil-Rückhaltesystem nach Anspruch 13, bei dem das federunterstützte Mittel ein einziehbarer Arm ist.

15. Radkeil-Rückhaltesystem nach Anspruch 14, bei dem der einziehbare Arm motorisiert ist.

## Revendications

1. Cale de roue (100) comprenant :
- un corps principal sensiblement rigide (150) configuré pour s'engager dans un pneu de roue (124) d'un véhicule (104) afin d'empêcher le mouvement d'une roue du véhicule (102) ;
- ledit corps principal (150) possède une face supérieure inclinée (170) orientée vers la roue, configurée pour recevoir en superposition et en butée ledit pneu de roue (124) ;
- ledit corps principal (150) a une base comprenant une face inférieure avec une première pluralité de dents (160) faisant saillie vers le bas et configurés pour s'engager de manière amovible dans une plaque de rétention (110) correspondante ancrée au sol comportant des protubérances, telles que des nervures, des crêtes ou autres (112), pour s'engager avec lesdites dents (160) et, en utilisation, pour résister au mouvement de la cale (100) et de la roue du véhicule (102) une fois que lesdites dents (160) sont engagées sur ladite plaque de rétention (110) et que le pneu de la roue (124) applique une pression sur la face supérieure (170) du corps principal (150) faisant face à la roue ;
**caractérisé en ce que** ledit corps principal est en outre pourvu d'au moins un élément d'extension (200) s'étendant à partir de ladite base et longitudinalement à partir du corps principal, le au moins un élément d'extension (200) étant configuré, en utilisation, pour être adjacent à au moins une partie d'une paroi latérale (126) du pneu de roue, le au moins un élément d'extension (200) comprenant en outre une deuxième pluralité de dents (160) également configurés pour engager de manière libérable ladite plaque de rétention (110) correspondante ancrée au sol ayant des protubérances (112) pour l'engagement avec lesdites dents et pour résister davantage au mouvement de la cale de roue (100) et de la roue du véhicule (102).

2. Cale de roue (100) selon la revendication 1, dans lequel il comprend une entretoise résiliente s'engageant dans le pneu de la roue.

3. Cale (100) selon l'une des revendications 1 et 2, dans lequel il comprend un renflement (180) d'engagement du pneu de roue, le renflement faisant saillie à partir d'une partie supérieure du corps principal et configuré pour engager une partie du pneu de roue (124).

4. Cale de roue (100) selon l'une des revendications 1 à 3, dans laquelle le corps principal est monolithique.

5. La cale (100) selon l'une des revendications 1 à 4, dans laquelle l'au moins un élément d'extension (200) s'étend le long d'au moins une partie d'un côté du corps principal (152).

6. Cale (100) selon l'une des revendications 1 à 5, dans laquelle l'au moins un élément d'extension est formé intégralement avec le corps principal.

7. Cale de roue (100) selon l'une des revendications 1 à 5, dans laquelle l'au moins un élément d'extension est couplé au corps principal.

8. Cale de roue (100) selon l'une des revendications 1 à 5, dans laquelle chacun des au moins un élément d'extension est couplé de manière pivotante au corps principal.

9. Système de retenue pour cale de roue comprenant :
- une cale (100) selon la revendication 1, et
- une plaque de base (110) correspondante ancrée au sol configurée pour être disposée sous un pneu de roue (124) et sous ladite cale (100), et configurée pour s'engager mécaniquement dans les éléments dentés de la cale (160).

10. Système de retenue pour cale de roue selon la revendication 9, dans lequel la plaque de base (110) ancrée au sol comprend des moyens de chauffage suffisants pour faire fondre la neige ou la glace.

11. Système de retenue pour cale de roue selon l'une des revendications 9 et 10, dans lequel la plaque de base (110) ancrée au sol est configurée pour être ancrée de manière amovible au sol (106).

12. Système de retenue pour cale de roue selon l'une des revendications 9 à 11, dans lequel il comprend une pluralité de plaques de base ancrées au sol (112).

13. système de retenue pour cale de roue selon l'une des revendications 9 à 12, dans lequel il comprend des moyens assistés par ressort configurés pour déplacer la cale de roue (100) dans et hors de la position d'engagement sur ladite plaque de base (110) ancrée au sol.

14. Système de retenue pour cale de roue selon la revendication 13, dans lequel le moyen assisté par ressort est un bras rétractable.

15. Système de retenue pour cale de roue selon la revendication 14, dans lequel le bras rétractable est motorisé.
